# EUROPÄISCHE PATENTSCHRIFT

(11) **EP 2 410 222 B1**
(45) Veröffentlichungstag und Bekanntmachung des Hinweises auf die Patenterteilung: **07.11.2012**
(21) Anmeldenummer: 10015701.5
(22) Anmeldetag: 16.12.2010
(51) Int. Cl.: F16L 5/02

(54) **Vorrichtung zum Befestigen und Abdichten einer durch eine Wandöffnung einer Gebäudewand führenden Leitung**
Device for fixing and sealing a conduit through a wall opening of a building wall
Dispositif de fixation et d'étanchéification d'une conduite passant à travers une ouverture de mur de bâtiment

(30) Priorität: 21.07.2010 DE 102010031877
(43) Veröffentlichungstag der Anmeldung: 25.01.2012
(73) Patentinhaber: Langmatz GmbH, 82467 Garmisch-Partenkirchen (DE)
(72) Erfinder: Ertl, Werner, 82490 Farchant (DE)
(74) Vertreter: Flosdorff, Jürgen

(56) Entgegenhaltungen:
- EP-A1- 0 681 134
- DE-A1-102008 027 901
- DE-C1- 4 131 147

## Beschreibung

Vorrichtung zum Befestigen und Abdichten einer durch eine Wandöffnung einer Gebäudewand führenden Leitung

Die Erfindung betrifft eine Vorrichtung zum Befestigen und Abdichten einer durch eine Wandöffnung einer Gebäudewand führenden Leitung, mit einem die Leitung innerhalb der Wandöffnung mit radialem Abstand umgebenden Hohlkörper, der an beiden seitlichen Enden durch Abschlussstücke mit der Leitung verbunden ist und einen Hohlraum zur Aufnahme einer zunächst fließfähigen, dann erhärtenden Füllsubstanz begrenzt.

Der Begriff "Leitung" ist im weiten Sinne zu verstehend, wobei es sich entweder um ein Leerrohr zur Aufnahme eines Abschnitts wenigstens eines Stromkabels, eines Wasserrohres, eines Gasrohres oder einer Telekommunikationsleitung handeln kann oder um eine derartige Leitung selbst.

Wenn Kabel und Rohre in ein Gebäude eingeführt werden, müssen sie in der hierzu vorgesehenen Durchlassöffnung der Gebäudewand mechanisch befestigt werden, und der Zwischenraum zwischen der Leitung und der Wand muss gegen den Durchtritt von Wasser und möglichst auch Gas abgedichtet werden. Hierzu ist es seit langem bekannt, die Durchlassöffnung mit einem Mörtel auszufüllen oder insbesondere bei mit Hohlräumen versehenen Wänden eine Expansionssubstanz einzubringen, die zunächst fließfähig ist und später erhärtet. Dies hat sich nicht bewährt, da das Expansionsmaterial im fließfähigen Zustand in die unteren Hohlräume der Wanddurchführung unkontrolliert eindringt, wo ein großer Teil des Materials praktisch verloren geht, während es nicht in die oberen Bereiche der Durchlassöffnung gelangt.

Aus der DE 20 2007 018 490 U1 ist eine Vorrichtung der eingangs genannten Art bekannt, bei der eine aus einem flexiblen Material bestehende Hülse die Leitung umgibt, die zusammen mit endseitigen Abschlussstücken ein Volumen zur Aufnahme einer zunächst fließfähigen, expandierenden Füllsubstanz bildet. Die eingefüllte Füllsubstanz vergrößert durch eine chemische Reaktion ihr Volumen und baut dabei einen Druck zur Expansion der Hülse auf, durch den die Hülse an die Wand der Mauerdurchführung angepresst wird. Hierdurch wird die Hülse in der Maueröffnung verpresst, so dass sie durch Haftreibung und/oder Formschluss in der Maueröffnung fixiert ist.

EP 0 681 134 A1 offenbart eine Vorrichtung zur Durchführung von Leitungen durch eine Wandöffnung, bei der ein Futterrohr in die Wandöffnung eingesetzt ist, das aus zwei konzentrischen Rohren besteht, deren Wände mit Löchern versehen sind. In dem Ringraum zwischen den zwei Rohren befinden sich zunächst getrennte Komponenten eines Mehrkomponenten-Kunststoffschaums, dessen Bestandteile durch Betätigen einer von außen handhabbaren Vorrichtung durchmischt werden und dann sowohl durch die äußere als auch durch die innere Ringwand austreten und die dortigen Hohlräume ausfüllen.

DE 10 2008 027 901 A1 offenbart eine Anordnung zum Durchführen eines Glasfaserleiters durch eine Gebäudewand, bei der ein Dichtungsmittel durch ein Loch in einer Überwurfmutter und von dort in den Zwischenraum zwischen dem Außenumfang eines durch eine Kernlochbohrung verlaufenden Rohres und der Wandung der Kernlochbohrung eingeführt wird. Die Überwurfmutter liegt dabei an der Gebäudewand an deren Innenseite an.

DE 41 31 147 C1 offenbart eine Vorrichtung zur Brandabschottung einer Wandöffnung für die Durchführung von Leitungen, bei der Brandschutzplatten zwischen sich und den Laibungsflächen der Wandöffnung geschlossene Hohlräume bilden und ein Brandschutzmittel enthalten, das im Brandfall durch Austrittsöffnungen in die Wandöffnung eintritt.

Der vorliegenden Erfindung liegt die Aufgabe zugrunde, eine Vorrichtung der betrachteten Art anzugeben, die für Mauerdurchführungen aller üblicherweise auftretenden Durchmesser geeignet ist und auch bei Wänden mit eingeschlossenen Hohlräumen zuverlässig für eine hochgradige Abdichtung sorgt.

Diese Aufgabe wird erfindungsgemäß durch die Merkmale des Patentanspruchs 1 gelöst.

Vorteilhafte Ausgestaltungen der Erfindungen sind in den Unteransprüchen gekennzeichnet.

Die Erfindung sieht vor, dass als Hohlkörper, der die Leitung mit radialem Abstand umgibt, ein starres Rohr verwendet wird, dessen Wand eine Vielzahl von über den Umfang verteilten, kleinen Löchern aufweist, die in Umfangsrichtung vorzugsweise gleichmäßig voneinander beabstandet sind, so dass die Füllsubstanz im wesentlichen gleichmäßig nach allen Seiten austritt und den Zwischenraum zwischen dem Rohr und der Wand ausfüllt. Dabei ist der Durchmesser der Löcher auf die verwendete Füllsubstanz abgestimmt, wodurch die Menge der austretenden Füllsubstanz gesteuert werden kann.

Als Füllsubstanz wird mit Vorteil ein Zweikomponenten-Expansionsmaterial wie ein Zwei-Komponenten PU-Schaum verwendet. Das Material bleibt etwa eine Minute lang flüssig und tritt dabei in Folge der klein bemessen Löcher nach allen Seiten weitestgehend gleichmäßig aus, nach oben, seitlich und nach unten, wodurch verhindert ist, dass ein Großteil der Substanz nach unten austritt und in Hohlräumen im unteren Bereich der Wandöffnung versickert.

Dabei ist die Erfindung nicht auf die Verwendung eines durch chemische Reaktion expandierbaren Materials beschränkt, sondern es kann auch eine zunächst flüssige und sich dann erhärtende Füllsubstanz, die nicht expandiert, durch eine Pumpe oder Presse oder durch eine manuell betätigte Befüllvorrichtung eingebracht werden.

Die Leitung wird auf diese Weise durch die aus dem starren Rohr ausgetretene, erhärtete Füllsubstanz in der Wanddurchführung fixiert. Außerdem kann die Substanz die zu der Kernlochbohrung offenen Hohlräume in der Wand ausfüllen, indem genügend Füllsubstanz in das starre Rohr eingeführt wird, so dass auch im Fall gemauerter Wände, die auch aus Hohlblocksteinen bestehen können, eine zuverlässige Befestigung und Abdichtung hervorgerufen wird.

Das starre Rohr kann mit den daran befestigten Abschlussstücken fest mit der Leitung verbunden, beispielsweise an dieser angeklebt sein, oder aber in einem Klemmsitz auf diese aufgeschoben sein. Das starre Rohr kann zweckmäßigerweise einen Durchmesser von etwa 30 - 50 Millimeter, vorzugsweise 36 Millimeter haben. Als Material für das Rohr kommt beispielsweise ein starrer Kunststoff wie ABS oder auch ein Metall in Betracht.

Wenn die Leitung ein Leerrohr ist, durch das nach seinem Einbau ein oder mehrere Kabel oder z.B. ein Rohr in das Gebäude eingeführt wird, ist dieses vorteilhafterweise an der Gebäudeaussenseite an einem Dichtstopfen, der in die Wanddurchführung eingreift und mit einer ringförmigen Dichtungswulst außen gegenüber der Wand abgedichtet ist, und an der Gebäudeinnenseite an einer Spannvorrichtung befestigt, die mit einer Dichtscheibe die Maueröffnung verschließt und das Leerrohr ergreift und durch Anziehen einer Mutter eine solche Zugkraft auf das Leerrohr überträgt, dass die die Wandbohrung umgebende Dichtungswulst des Dichtstopfens fest an die Wand angepresst wird. Ein derartiger Dichtstopfen und die zugehörige Spannvorrichtung sind in der DE 10 2008 027 901 A1 offenbart, deren Offenbarungsgehalt hier eingeschlossen wird.

Mit Vorteil kann vorgesehen sein, dass wenigstens ein Abschluss-Stück, vorzugsweise das der Gebäudeaußenseite zugewandte, Löcher aufweist, so dass die Füllsubstanz den Hohlraum in der Wandbohrung bis zu der Dichtungswulst ausfüllen kann. Wenn auch das andere Abschluss-Stück Löcher aufweist, kann auch der gesamte Hohlraum bis zur inneren Dichtscheibe ausgefüllt werden.

Bei der erfindungsgemäßen Vorrichtung ist der Austritt der Füllsubstanz durch geeignete Auswahl der Lochgröße des starren Rohres und des Füllmaterials zeitlich und mengenmäßig steuerbar.

Weitere Einzelheiten der Erfindung ergeben sich aus der nachfolgenden Beschreibung einer bevorzugten Ausführungsform sowie anhand der Zeichnungen. Dabei zeigen:
- Fig. 1 A und 1 B: einen Längsschnitt und eine perspektivische Ansicht einer durch eine Wand aus Hohlblocksteinen führenden erfindungsgemäßen Vorrichtung;
- Fig. 2: einen Längsschnitt durch eine Wand, deren Durchlassöffnung mit der erfindungsgemäßen Vorrichtung mit Füllsubstanz gefüllt ist;

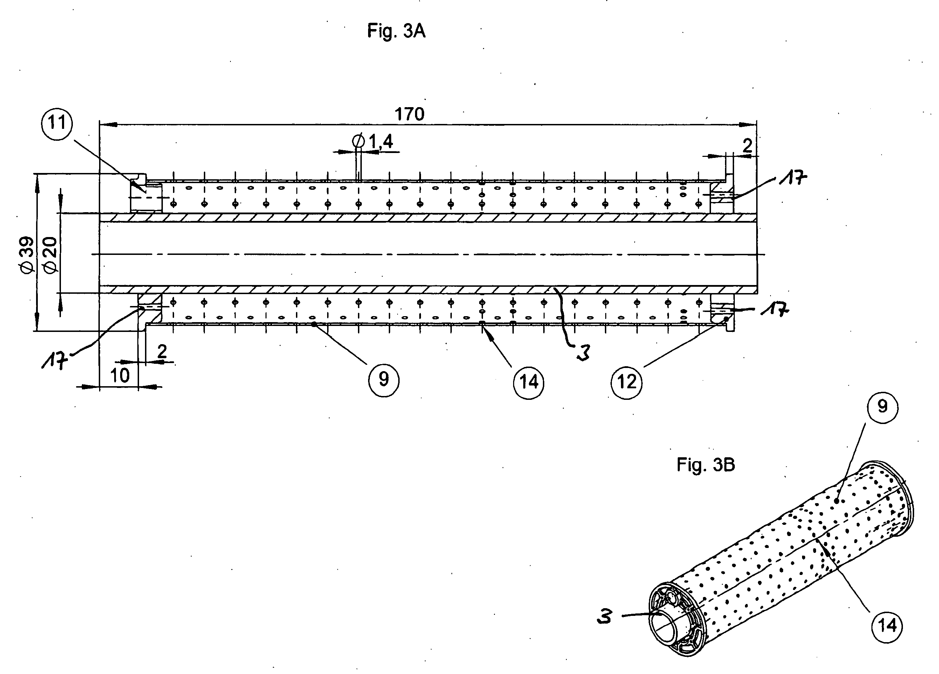

- Fig. 3A und 3B: einen Längsschnitt und eine perspektivische Ansicht eines auf einer Leitung befestigten starren Rohres;
- Fig. 4A und 4B: eine Seitenansicht und eine Abwicklung eines starren Rohres.

Eine Wand aus Hohlblocksteinen 1 enthält eine Durchführungsöffnung 2, durch die mittig ein oben als Leitung bezeichnetes Leerrohr 3 hindurchführt, das an der Gebäudeaußenseite 4 an einem Dichtstopfen 5 befestigt ist. Zwischen dem Dichtstopfen 5 und der Außenseite der Wand befindet sich eine Dichtungswulst 21. An der gegenüberliegenden Gebäudeinnenseite ist das Leerrohr 3 von einer Spannvorrichtung 6 ergriffen, wobei zwischen der Sparinvorrichtung 6 und der Innenwand 7 eine zusätzliche Dichtscheibe 8 angeordnet ist.

Auf dem Leerrohr 3 ist ein starres Rohr 9 größeren Durchmessers befestigt, wobei der so entstehende Hohlraum 10 durch ringförmige seitliche Abschlussstücke 11, 12 verschlossen ist, die an den Rohren befestigt sind. Die Abschlussstücke haben Durchgangslöcher 17.

Durch das Abschlussstück 12 führt ein von der Gebäudeinnenseite her kommender Schlauch 13 in den Hohlraum 10, der zuvor durch die Dichtscheibe 8 hindurchführt. Durch diesen Schlauch 13 wird eine zunächst fließfähige, dann erhärtende Füllsubstanz in den Hohlraum 10 eingeführt.

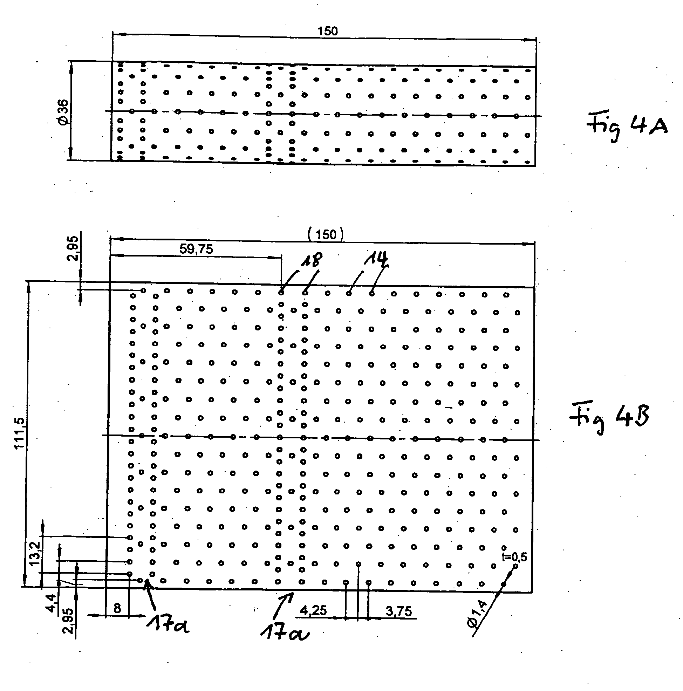

Das starre Rohr 9 enthält eine Vielzahl kleiner Löcher 14, die jeweils in Umfangsrichtung und in Längsrichtung gleichmäßig voneinander beabstandet sind und dabei einen kleinen Abstand von wenigen Millimetern voneinander haben. In den in Figur 4 mit dem Bezugszeichen 17a angedeuteten Bereichen haben die Löcher 18 in Umfangsrichtung einen kleineren Abstand voneinander. In diesen Bereichen befinden sich Stege 19 von Hohlblocksteinen, so dass hier eine größere Menge Füllsubstanz austritt und die Stege 19 umfasst.

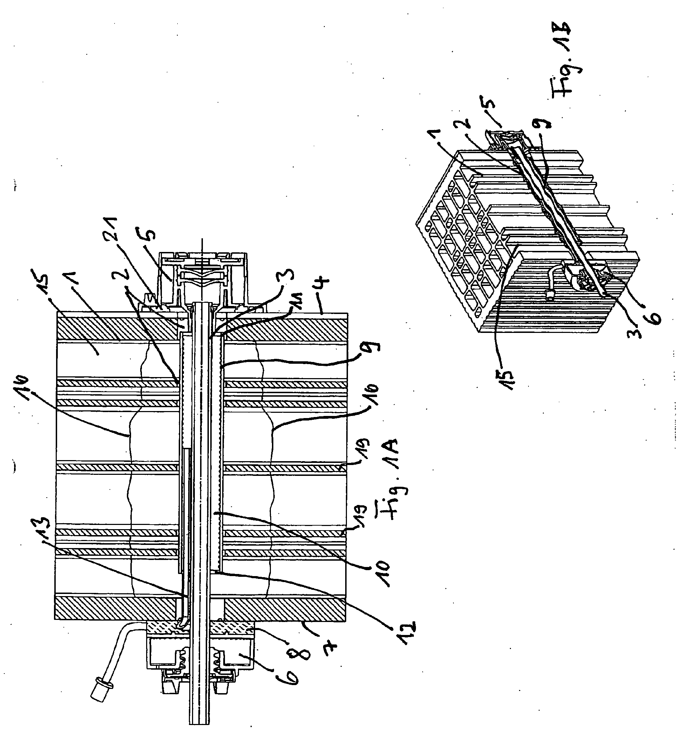

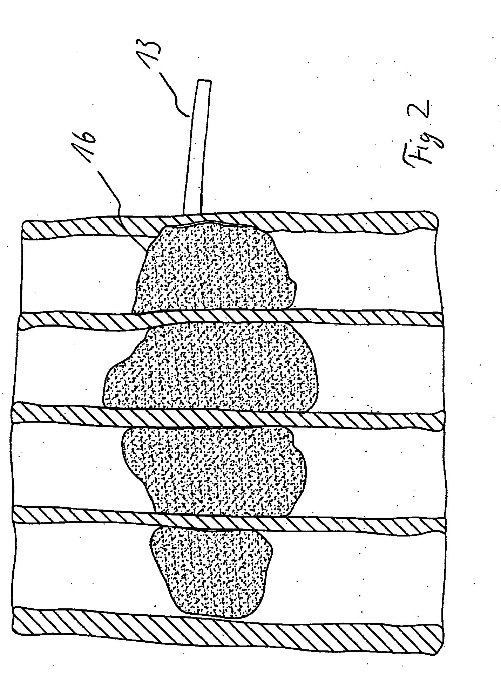

Die expandierte und erhärtete Füllsubstanz, die gleichmäßig nach allen Richtungen aus den Löchern 14 ausgetreten ist, füllt teilweise die Hohlräume 15 der Hohlblocksteine sowohl oberhalb. als auch unterhalb der erfindungsgemäßen Vorrichtung bis zu einer Linie 16 in Fig. 1A. Eine ähnliche Verfüllung der Hohlräume zeigt Fig. 2 als Ergebnis eines Versuchs mit der erfindungsgemäßen Vorrichtung.

Es wird betont, dass die Erfindung nicht auf die beschriebenen und dargestellten Ausführungsformen beschränkt ist. Vielmehr sind alle offenbarten Merkmale auf jede sinnvolle Weise einzeln miteinander kombinierbar.

## Patentansprüche

1. Vorrichtung zum Befestigen und Abdichten einer durch eine Wandöffnung (2) einer Gebäudewand (1) führenden Leitung (3), mit einem die Leitung (3) innerhalb der Wandöffnung mit radialem Abstand umgebenden Hohlkörper (9), der an beiden seitlichen Enden durch Abschlussstücke (11,12) mit der Leitung (3) fest verbunden ist und einen Hohlraum (10) zur Aufnahme einer zunächst fließfähigen, dann erhärtenden Füllsubstanz begrenzt,
**dadurch gekennzeichnet,**
**dass** der Hohlkörper ein starres Rohr (9) ist, dessen Wand eine Vielzahl von über den Umfang verteilten, kleinen Löchern (14, 18) aufweist.

2. Vorrichtung nach Anspruch 1,
**dadurch gekennzeichnet,**
**dass** die Löcher (14,18) in Umfangsrichtung jeweils gleichmäßig voneinander beabstandet sind.

3. Vorrichtung nach Anspruch 1 oder 2,
**dadurch gekennzeichnet,**
**dass** die Abschlussstücke (11,12) fest mit dem Rohr (9) und mit der Leitung (3) verbunden sind oder in einem Klemmsitz auf diese aufgeschoben sind.

4. Vorrichtung nach einem der Ansprüche 1 bis 3,
**dadurch gekennzeichnet,**
**dass** wenigstens ein Abschluss-Stück (11,12) Löcher (17) aufweist.

5. Vorrichtung nach Anspruch 1
**dadurch gekennzeichnet,**
**dass** die Füllsubstanz ein Zweikomponenten-Expansionsmaterial wie ein Zwei-Komponenten PU-Schaum ist.

6. Vorrichtung nach einem der Ansprüche 1 bis 5,
**dadurch gekennzeichnet,**
**dass** die Löcher (14, 18) einen Durchmesser von 1-2 Millimeter, vorzugsweise von 1,5 Millimeter haben.

7. Vorrichtung nach einem der Ansprüche 1 bis 6,
**dadurch gekennzeichnet,**
**dass** das starre Rohr (9) einen Durchmesser von 30 - 50 Millimeter, vorzugsweise von 36 Millimeter hat.

8. Vorrichtung nach einem der Ansprüche 1 bis 7,
**dadurch gekennzeichnet,**
**dass** die Leitung (3) ein Leerrohr ist, das an der Aussenseite der Gebäudewand von einem Dichtstopfen (5) und an der Innenseite der Gebäudewand von einer Spannvorrichtung (6) gehalten ist.

## Claims

1. Apparatus for fastening and sealing a conduit passing through a wall opening (2) in a building wall (1) with hollow body (9), which surrounds the conduit (3) within the wall opening with a radial spacing and is rigidly connected to the conduit (3) at both lateral ends by end pieces (11, 12) and defines a hollow space (10) for receiving an initially flowable and subsequently setting filling substance, **characterised in that** the hollow body is a rigid tube (9), whose wall has a plurality of small holes (14, 18) distributed over the periphery.

2. Apparatus claimed in claim 1, **characterised in that** the holes (14, 18) are uniformly spaced from one another in the peripheral direction.

3. Apparatus claimed in claim 1 or 2, **characterised in that** the end pieces (11, 12) are rigidly connected to the tube (9) and to the conduit (3) or are pushed onto them with a force fit.

4. Apparatus claimed in one of claims 1 to 3, **characterised in that** at least one end piece (11, 12) has holes (17).

5. Apparatus claimed in claim 1, **characterised in that** the filling substance is a two-component expansion material, such as a two-component PU foam.

6. Apparatus claimed in one of claims 1 to 5, **characterised in that** the holes (14, 18) have a diameter of 1-2 millimetres, preferably of 1.5 millimetres.

7. Apparatus claimed in one of claims 1 to 6, **characterised in that** the rigid tube (9) has a diameter of 30-50 millimetres, preferably of 36 millimetres.

8. Apparatus claimed in one of claims 1 to 7, **characterised in that** the conduit (3) is an empty tube which is held at the outer side of the building wall by a sealing plug (5) and at the inner side of the building wall by a clamping device (6).

## Revendications

1. Dispositif servant à fixer et à étanchéifier une conduite (3) passant à travers une ouverture (2) de mur de bâtiment (1), doté d'un corps creux (9) entourant la conduite (3) à l'intérieur de l'ouverture de mur à une distance radiale, lequel corps creux est relié de manière fixe au niveau des deux extrémités latérales par des pièces de fermeture (11, 12) à la conduite (3) et qui délimite un espace creux (10) servant à recevoir une substance de remplissage en premier lieu apte à l'écoulement, puis devant être durcie,
**caractérisé en ce**
**que** le corps creux est un tube rigide (9), dont la paroi présente une pluralité de petits trous (14, 18) répartis sur la périphérie.

2. Dispositif selon la revendication 1,
**caractérisé en ce**
**que** les trous (14, 18) sont espacés les uns des autres dans la direction périphérique respectivement de manière homogène.

3. Dispositif selon la revendication 1 ou 2,
**caractérisé en ce**
**que** les pièces de fermeture (11, 12) sont reliées de manière fixe au tube (9) et à la conduite (3) ou sont enfilées sur ces derniers dans un siège de serrage.

4. Dispositif selon l'une quelconque des revendications 1 à 3,
caractérisé en
qu'au moins une pièce de fermeture (11, 12) présente des trous (17).

5. Dispositif selon la revendication 1,
**caractérisé en ce**
**que** la substance de remplissage est un matériau expansible à deux composants tel qu'une mousse de polyuréthane à deux composants.

6. Dispositif selon l'une quelconque des revendications 1 à 5,
**caractérisé en ce**
**que** les trous (14, 18) présentent un diamètre allant de 1 à 2 millimètres, de préférence un diamètre de 1,5 millimètre.

7. Dispositif selon l'une quelconque des revendications 1 à 6,
**caractérisé en ce**
**que** le tube rigide (9) présente un diamètre allant de 30 à 50 millimètres, de préférence un diamètre de 36 millimètres.

8. Dispositif selon l'une quelconque des revendications 1 à 7,
**caractérisé en ce**
**que** la conduite (3) est un tube vide qui est maintenu au niveau du côté extérieur du mur de bâtiment par un bouchon étanche (5) et au niveau du côté intérieur du mur de bâtiment par un dispositif de serrage (6).
